# EUROPEAN PATENT SPECIFICATION

(11) **EP 2 177 902 B1**
(45) Date of publication and mention of the grant of the patent: **21.09.2011**
(21) Application number: 09169035.4
(22) Date of filing: 10.06.2003
(51) Int. Cl.: G01N 27/447

(54) **Method and system for multi-stage isoelectric focussing**
Verfahren und System zum mehrstufigen isoelektrischen Fokussieren
Procédé et système pour focalisation isoélectrique en plusieures étapes

(30) Priority: 07.06.2002 DK 200200875; 09.08.2002 US 402056 P
(43) Date of publication of application: 21.04.2010
(62) Divisional of application: 07118878.3
(73) Proprietor: Picosep A/S, 5230 Odense M (DK)
(72) Inventor: Mose Larsen, Peter, 5230, Odense M (DK); Fey, Stephen John, 5491, Blommenslyst (DK); Schmidt, Henrik, 68519, Vierheim (DE); Pryds, Steffen, 5000, Odense C (DK); Faltum, Carsten, 3480, Fredensborg (DK); Rubin, Adam, 2730, Herlev (DK)
(74) Representative: Orsnes, Henrik Egede

(56) References cited:
- EP-A- 1 044 716
- WO-A-02/32591
- WO-A1-01/04129
- US-A- 4 443 319
- US-A- 6 033 784

## Description

### Field of the invention

The present invention relates to a method of separating biocomponents contained in a liquid, such as biomolecules including proteins and nucleic acids. The invention also includes a separating system and a separating unit, which can be used in the method.

### Background of the invention

Separation of proteins from a complex mixture has traditionally been performed by utilising chromatographic techniques or gel electrophoresis techniques. Traditional gel electrophoresis techniques are however time and labour consuming and may involve limitations with respect to resolution.

pH gradients in gels have e.g. been provided for polyacrylamide matrices as described in WO 93/11174 and WO 97/16462.

Since 1975, complex mixtures of proteins have generally been separated by means of two dimensional gel electrophoresis in which the physical separation of the proteins in the first dimension gel is based upon a separation according to the isoelectric point of each of the proteins to be analysed. This is referred to as isoelectric focussing (IEF) of the proteins. (See e.g. O'Farrell PH. High resolution two-dimensional electrophoresis of proteins. JBiol Chem. 1975 May 25;250(10):4007-21).

However, a single IEF gel cannot resolve all of the proteins present in a single cell type since there are typically more than 20,000 different proteins in a cell. Therefore many investigators who want to study and identify some or all of the proteins expressed in a cell (proteomics) have used a second 'dimension' - a second gel wherein the proteins are separated at right angles to the first IEF gel, where the proteins are separated based on differences of their respective molecular weight. This is called two-dimensional gel electrophoresis (2DGE), described for instance in US 4443319.

Another method is described in EP1044716, wherein IEF is used to separate biocomponents into fractions and then these fractions may be further separated, by further IEF steps.

### Disclosure of the invention

In the following the term 'biomolecules' is intended to include components of biological origin, such as human origin or synthetic components resembling these. The biocomponent may e.g. include biomolecules, tissues, cells, body fluids, blood components, microorganism, and derivatives thereof, or parts thereof as well as any other biocomponent.

The biocomponent may include one or more biomolecules of microbial, plant, animal or human origin or synthetic molecules resembling them. The biocomponent or components may preferably be of human origin or synthetic molecules resembling them.

Basically the method is particularly useful for the separation of biomolecules such as proteins, glyco proteins, nucleic acids, such as RNA, DNA, cDNA, LNA, PNA, oligonucleotides, peptides, hormones, antigen, antibodies, lipids and complexes including one or more of these molecules, said biomolecule preferably being selected from the group consisting of proteins and proteins complexes.

Particularly relevant examples of biomolecules are proteins, peptides and protein complexes. Protein complexes include any chemical substances wherein at least one protein is linked, e.g. linked by ionic links or Van der Waals forces. The protein complexes may e.g. include at least 10 % by weight of the protein.

The proteins include denatured, partly denatured and non-denatured proteins. The denaturation degree depends on the substrate, the composition forming the separating coating, the structure of the separating coating, and the composition and or structure gradient of the separation coating if this coating comprises such gradient or gradients on the substrate. The denaturation degree also depends on the liquid comprising the proteins.

Thus, non-denatured proteins can be separated, because the biomolecules are adsorbed to (and are mobile on) the separation layer. This provides the further advantage that separated proteins or other biocomponents can be tested directly for biological activity without the need for an isolation and optional re-folding step.

The method is particularly useful for the separation of nucleic acids, proteins and parts thereof (mono-, di- and polypeptides and mono-, di- and polynucleotides), and complexes including nucleic acids and proteins.

The biocomponents to be separated may include a mixture of different types of biocomponents e.g. a mixture of proteins and nucleic acids.

The biocomponents to be separated are contained in a liquid as described further below.

The biocomponents are separated from each other by using the differences in isoelectric points (pI values) of the biocomponents. In order to obtain a separation it is thus necessary that the biocomponents include at least two biocomponents having different pI values.

According to the method of the invention the biocomponents are separated on one or more separating paths.

The term "separating path" means a path in the form of a separating coating carried on a substrate, wherein said separating coating comprises one or more separating layers, at least one separating layer consisting of or comprising one or more pH active components comprising pH active groups defined as chemical groups that are capable of being protonated or deprotonated in aqueous environments.

The separating path may have any length and any distance e.g. as described further below.

The area closer to the negative electrode is designated the negative end of the separating path and the area closer to the positive electrode is designated the positive end of the separating path.

It may be desired to select the separating path so that the separating coating on the separating path includes a pH value provided by said pH active group, which pH value is lower than one or more of the pI values of the biocomponents and higher than one or more of the pI values of the other biocomponents. The separating coating may preferably have a pH value provided by the pH active group, which pH value is at least 0.1, such as at least 0.5, or such as at least 1 pH unit lower than one or more of the pI value of the biocomponents and at least 0.1, such as at least 0.5, or such as at least 1 pH unit higher than the pI value of the other biocomponents.

The greater the difference between the pH value of the separating coating and the pI value of the specific biocomponents, the faster the separation will be performed. The speed of the separation may naturally also be adjusted by the electrical field applied over the electrodes.

The pH value may be essentially constant over the path or it may vary continuously or stepwise.

The separating coating may have a pH value which varies less than 1 pH unit, such as less than 0.5 pH unit or even less than 0.1 unit along the separating path.

The separating coating may have a pH value which comprises a pH gradient along the separating path, said gradient being continuously or stepwise along the separating path. In one embodiment it is desired that the pH gradient includes a pH variation of up to about 8 pH values, more preferably between 0.1 and 5 pH units, such as between 0.5 and 3 units along the separating path. By using such path in the method, part of the biocomponents may be separated along the path, whereas other parts may be obtained as fractions.

The separating path can be in the form of strips with a separating coating e.g. as disclosed in WO 02/32591.

According to the invention, separation layer or layers include one or more pH active components, said pH active components being linked to the substrate via linker molecules having a photochemically reactive group, namely quinones, such as mentioned in intermediate document WO 02/071048.

According to the invention, the combination of quinone and pH active component is selected from the group consisting of quinones having the structural formulas I, II, III, IV, V, VI, VII, VIII, IX, X, XI, XII, XIII, XIV, XV, XVI, and XVII

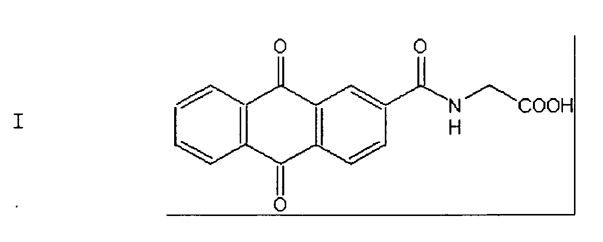

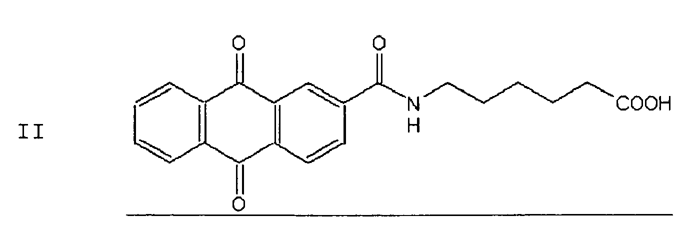

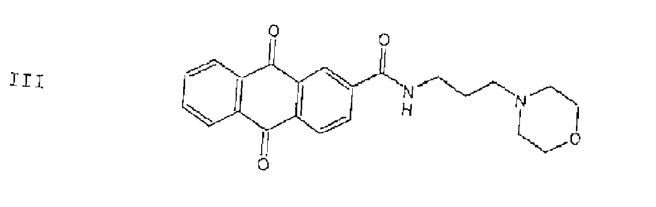

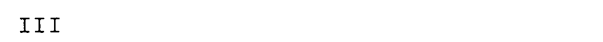

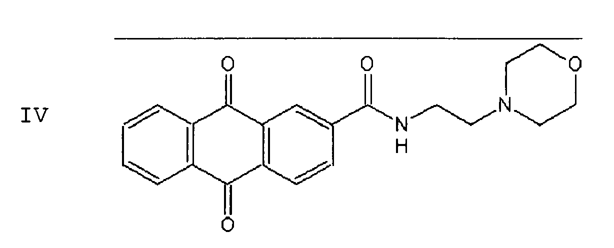

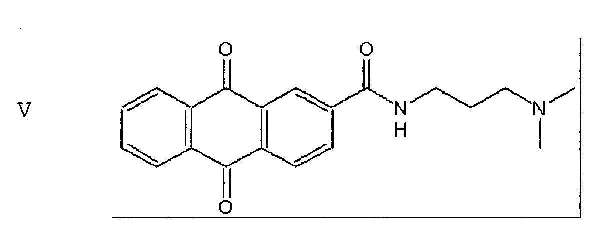

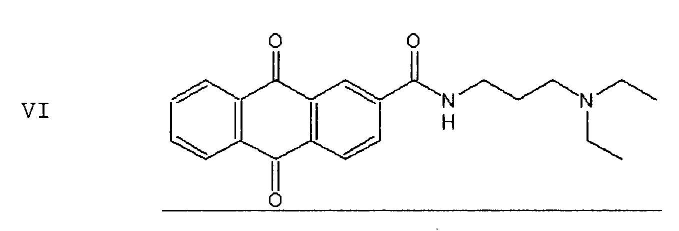

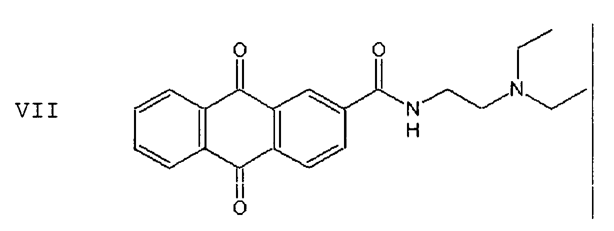

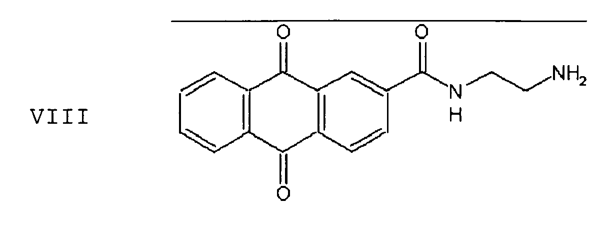

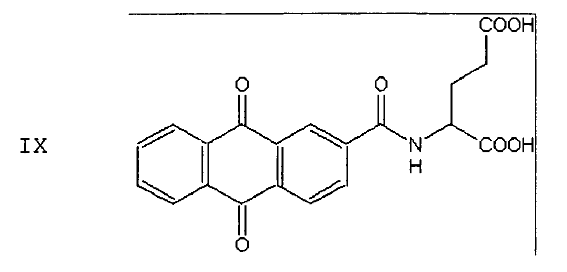

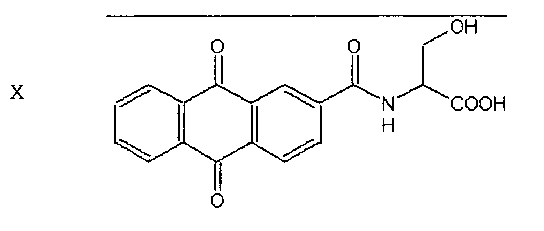

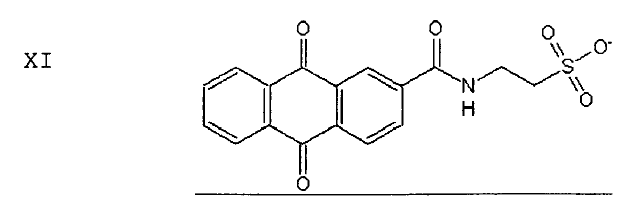

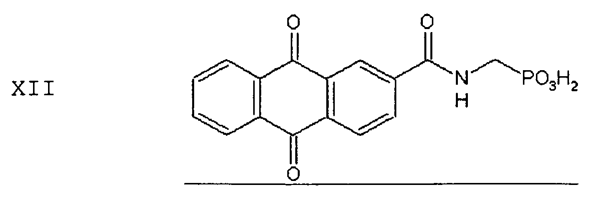

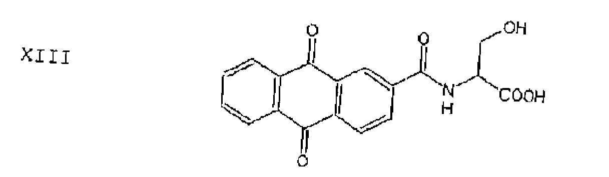

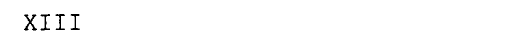

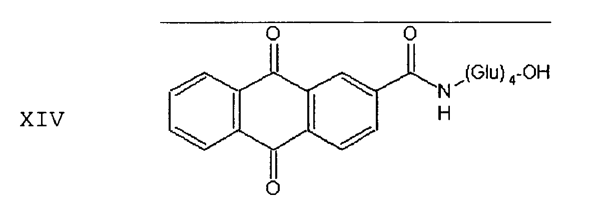

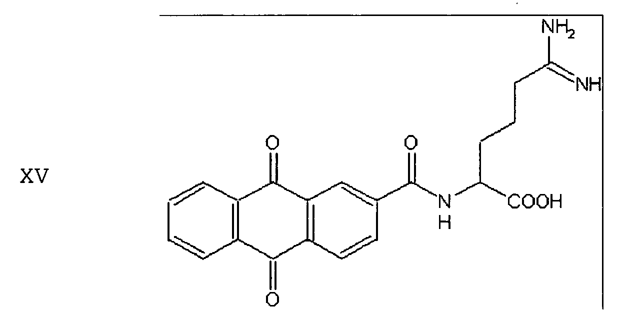

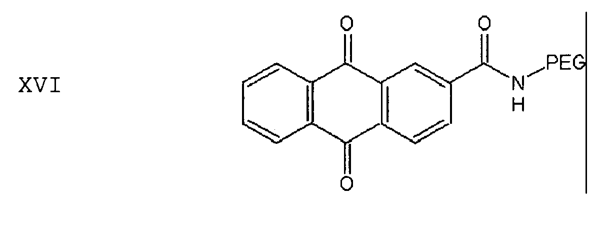

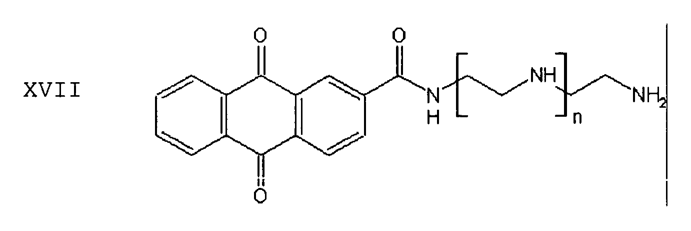

Further information about the production and use of quinones can be found in WO 96/31557 and WO 01/04129.

The separating paths may have a separating coating with a thickness of between 0.01 and 15 µm, such as between 0.5 and 10 µm.

### Drawing

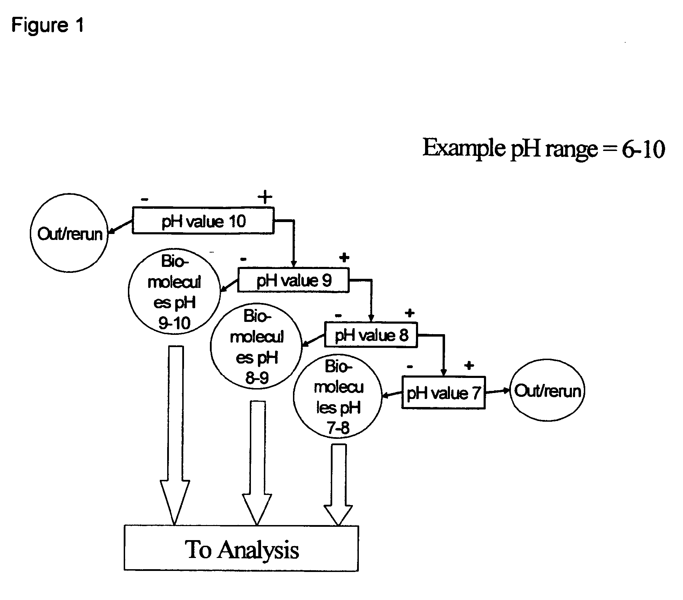

Figure 1 is a schematic illustration of isoelectric focusing. In this example a liquid comprising proteins from a cell is applied to a first separating path having a pH value of about 10. An electric field is applied over the path. The proteins having pI values below 10 are collected and separated further on a separating path having a pH value about 9. The fraction of proteins having pI values between 9-and 10 can then be collected at the collection station closest to the cathode. The proteins collected at the collection station closest to the anode are subjected to a further separation on a separating path having a pH value about 8. The separation is repeated until fractions having pI values in the intervals 7-8, 8-9 and 9-10 have been collected. These fraction could e.g. be further separated by using the method of the invention or they could be analysed or further separated by any other method.

### Example 1 - Manufacturing a separating unit with a pH-gradient for separation of proteins

A separating layer in the form of a pH gradient is fixed on a substrate material by reaction of anthraquinones with the substrate material. By using anthraquinones with two different side chains (an acid and a basic) and varying the supplied amount in the longitudinal direction a pH gradient is produced.

The substrate material for the pH-gradient was a polyethylene/polypropylene (PE/PP) felt from Freudenberg (VK1099, 60 g/m²), which was available in 30 mm wide rolls.

As acid pH carrying agent is used 4-(2-Anthraquinoyl)-4-oxo-3-aza-butanoic acid in a 2,5 mM solution in 96% ethanol.

As basic pH carrying agent is used N-(3-diethylamino-1-propylamino)-9,10-anthraquinone)-2-carboxamide in a 2,5 mM solution in 96% ethanol.

A length of felt was spooled to reel 1, and then connected to reel 2. The set-up is made such that the felt can be spooled from reel 1 to reel 2 at a constant speed. The felt is led past the application system at a constant speed of 21 cm/min.

60 ml of the acid component is filled in a syringe, and fixed in a Dual Syringe Pump model 33 form Harvard apparatus. 60 ml of the basic component is filled in a syringe and fixed in the Dual Syringe Pump as well. By silicone tubing the two syringes are connected to the inlet of an airbrush (model no. 155-7 from Badger Air Brush CO.). Nitrogen at a pressure of 0,1 - 0,2 bar is led to the airbrush as air atomising agent.

The pH gradient is produced by leading the acid component to the airbrush at a constant rate of 200 ml/min. for 5 seconds. Then the amount of acid component led to the airbrush is decreased linearly from 200 ml/min. to 0 ml/min in 80 seconds, while the amount of basic component is increased linearly from 0 ml/min. to 200 ml/min. also in 80 seconds.

After the felt has passed the applicator, the ethanol was evaporated from the surfaces and the anthraquinones containing the pH active chemical groups react with and bond to the felt.

The described procedure gives an approximately 30 cm long separating path (strop) with a separating layer having a pH gradient. By test with a pH indicator liquid, the strips showed a pH range from pH 6 to above pH 7,5. For protein separation the felt was cut into strips of 3 mm width - and only the middle 4 of each section used. Each path is provided with two collection stations in the form a porous electrode wick as described above.

### Example 2 - Manufacturing of a separating unit with an acid surface for separation of proteins.

A pH active surface is produced on a substrate material by reaction of anthraquinones with the substrate material. The anthraquinones used have pH active side chains thus giving the pH active surface.

The substrate material for the pH active surface was a polyethylene/polypropylene (PE/PP) felt from Freudenberg (VK1099, 60 g/m²), which was available in 30 mm wide rolls.

As acid pH carrying agent is used 4-(2-Anthraquinoyl)-4-oxo-3-aza-butanoic acid in a 2,5 mM solution in 96% ethanol.

A length of felt was spooled to reel 1, and then connected to reel 2. The set-up is made such that the felt can be spooled from reel 1 to reel 2 at a constant speed. The felt is led past the application system at a constant speed of 24 cm/min.

60 ml of the acid component is filled in a syringe, and fixed in a Dual Syringe Pump model 33 form Harvard apparatus. By silicone tubing the syringe is connected to the inlet of an airbrush (model no. 155-7 from Badger Air Brush CO.). Nitrogen at a pressure of 0,1 - 0,2 bar is led to the airbrush as air atomising agent.

Leading the acid component to the airbrush at a constant rate of 200 ml/min, thus applying it on the substrate material produces the pH active surface.

After the felt has passed the applicator, the ethanol was evaporated from the surfaces and the anthraquinones reacted with the felt fixing the pH active chemical groups.

The described procedure gives an equal acid surface, with a pH of about 5.5. For protein separation the felt was cut into paths of 3 mm width - and only the middle 4 of each section used. Each path is provided with two collection stations in the form a porous electrode wick as described above.

## Claims

1. A method of separating biocomponents contained in a liquid including at least two biocomponents having different isoelectric points (pI values), said method comprising the steps of
i. providing a first separating path in the form of a separating coating carried on a sheet-like substrate, wherein said separating coating comprises one or more separating layers, at least one separating layer consisting of or comprising one or more pH active components, linked to the substrate and comprising pH active groups defined as chemical groups that are capable of being protonated or deprotonated in aqueous environments,
ii. applying the liquid with the biocomponents to the separating coating,
iii. applying a voltage over the separating path by applying a positive electrode and a negative electrode in contact with the separating coating at a distance from each other along the separating path, the area closer to the negative electrode being designated the negative end of the separating path, and the area closer to the positive electrode being designated the positive end of the separating path,
iv. allowing at least some of the biocomponents to travel towards one of the electrodes to one or more collection stations,
v. collecting the once separated biocomponents from at least one collection station
**characterized in that** said pH active components being linked to the substrate via a quinone, wherein the combination of quinone and active component is selected from the group consisting of quinones having the structural formulas I, II, III, IV, V, VI, VII, VIII, IX, X, XI, XII, XIII, XIV, XV, XVI, and XVII

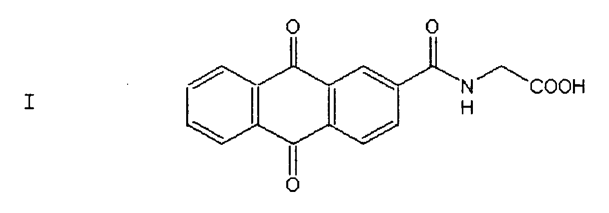

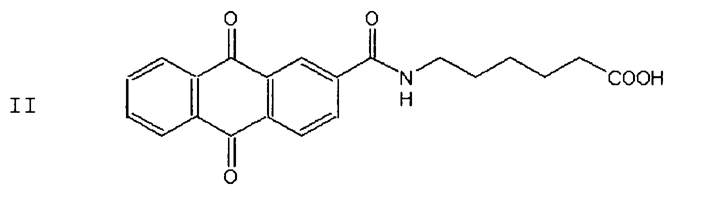

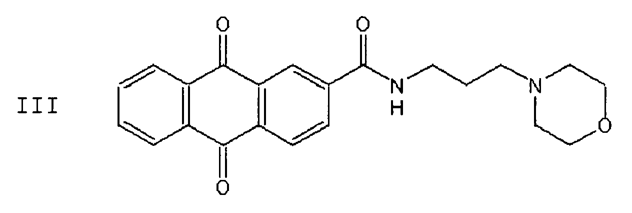

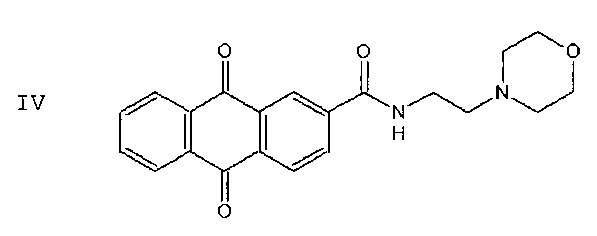

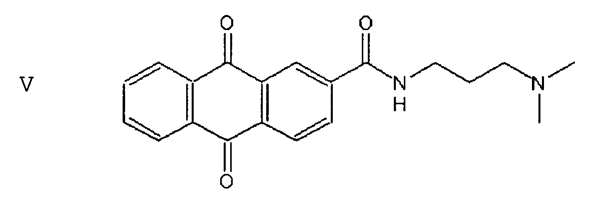

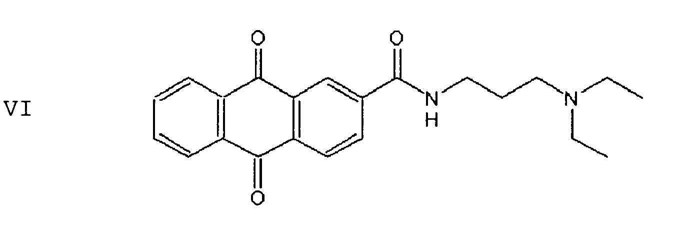

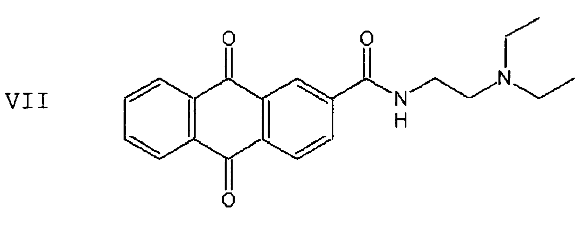

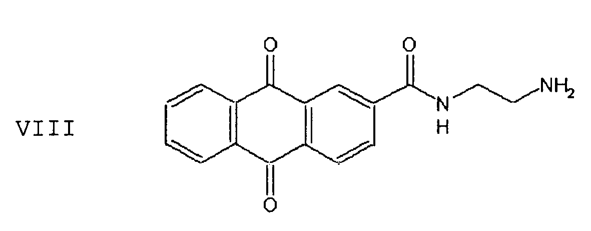

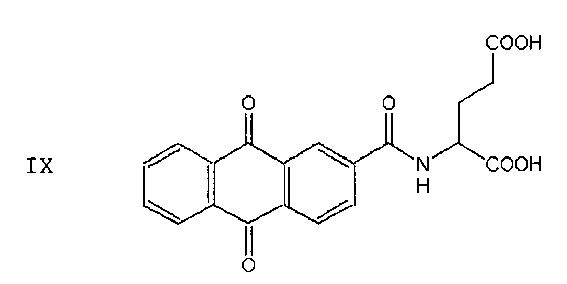

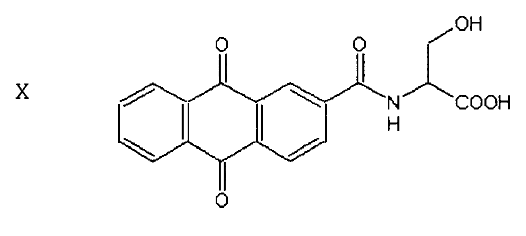

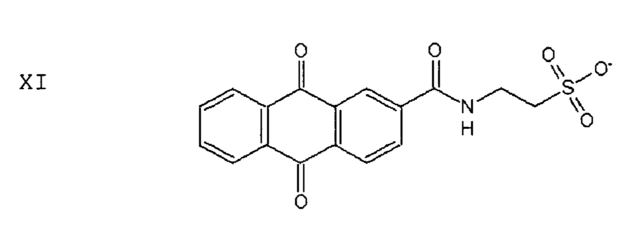

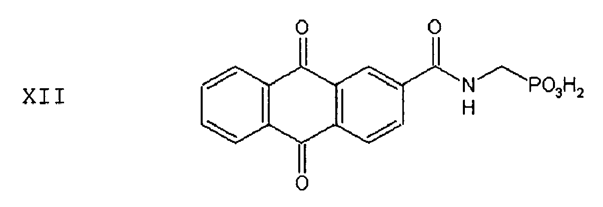

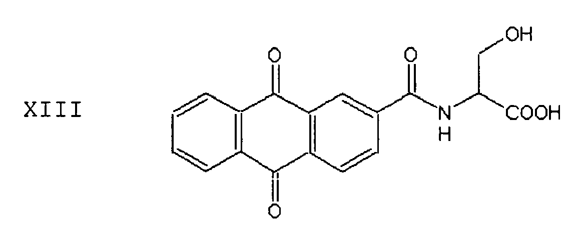

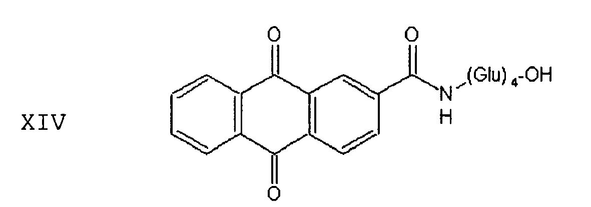

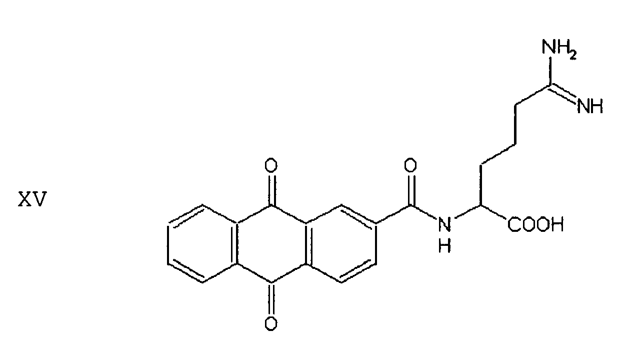

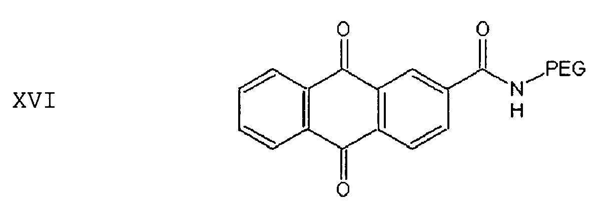

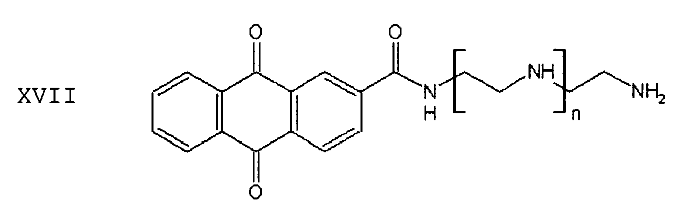

2. A method according to claim 1 wherein said separating coating has a pH value provided by said pH active groups, which pH value is lower than one or more of the pI values of the biocomponents and higher than one or more of the pI values of the other biocomponents, preferably the separating coating has a pH value provided by said pH active group, which pH value is at least 0.1, such as at least 0.5, or such as at least 1 pH unit lower than one or more of the pI values of the biocomponents and at least 0.1, such as at least 0.5, or such as at least 1 pH unit higher than the pI value of the other biocomponents, **characterized in that** the separating coating has a thickness of between 0.01 and 15 µm and.

3. A method according to any one of the claims 1 and 2 wherein said separating coating has a pH value which varies less than 1 pH unit, such as less than 0.5 pH unit or even less than 0.1 unit along the separating path, said separating coating preferably having a pH value which is essentially equal along the separating path.

4. A method according to any one of the claims 1-2 wherein said separating coating has a pH value which comprises a pH gradient along the separating path, said gradient being continuously or stepwise along the separating path, said pH gradient preferably including a pH variation of up to about 8 pH values, more preferably between 0.1 and 5 pH units, such as between 0.5 and 3 units along the separating path.

5. A method according to any one of the claims 1-4 wherein said separating path comprises two collection stations, one collection station designated the high pH collecting station placed closer to the negative electrode than the other collection station designated the low pH collecting station, the method comprising the step of collecting the biocomponents from one or both of the collecting stations, said collected biocomponents being subjected to a further separation, preferably using another separating path with pH active components.

6. A method according to any one of the claims 1-5 wherein the collected, once separated biocomponents are subjected to further separation by applying the biocomponents in a liquid onto a second separating path in the form of a separating coating carried on a substrate, wherein said separating coating comprises one or more separating layers, at least one separating layer consisting of or comprising one or more pH active components, linked to the substrate and comprising pH active groups, the pH value or the range of pH values of the separating coating of the second separating path being different from the pH value or the range of pH values of the separating coating of the first separating path.

7. A method according to claim 6 wherein a voltage is applied over the second separating path by applying a positive electrode and a negative electrode in contact with the separating coating at a distance from each other along the separating path, at least some of the biocomponents being allowed to travel towards one of the electrodes to one or more collection stations.

8. A separating system for use in the separation of biocomponents contained in a liquid including at least two biocomponents having different isoelectric points (pI values), said separating system comprising a set of separating paths, each in the form of a separating coating carried on a substrate, said set of separating paths including 2 or more separating paths, the separating coating of each of said separating paths comprising one or more separating layers, at least one separating layer consisting of or comprising one or more pH active components linked to the substrate and comprising pH active groups defined as chemical groups that are capable of being protonated or deprotonated in aqueous environments, the pH active groups providing the separating coating with a pH value along the separating path, the separating system comprising 2 or more separating paths that differ from each other with respect to the pH value of the separating coating,
**characterized in that** said pH active components being linked to the substrate via a quinone, wherein the combination of quinone and active component is selected from the group consisting of quinones having the structural formulas I, II, III, IV, V, VI, VII, VIII, IX, X, XI, XII, XIII, XIV, XV, XVI, and XVII

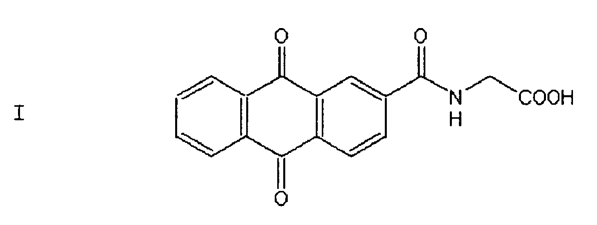

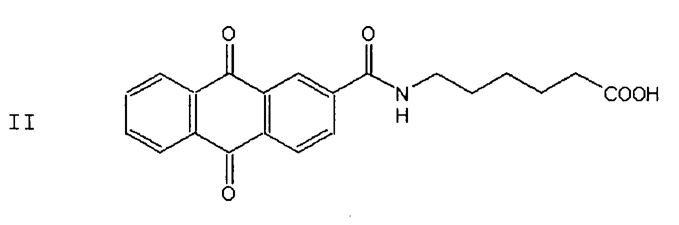

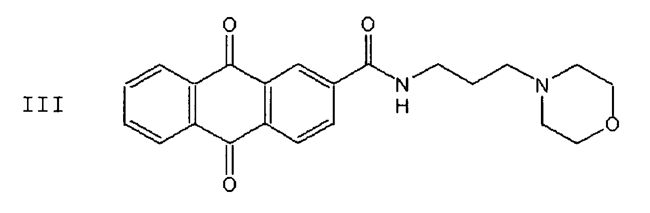

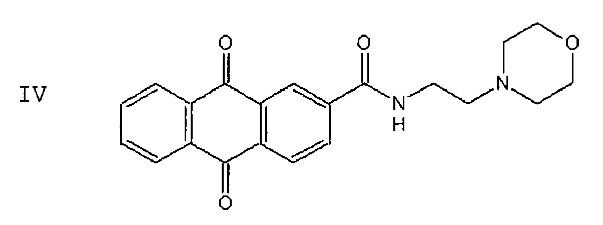

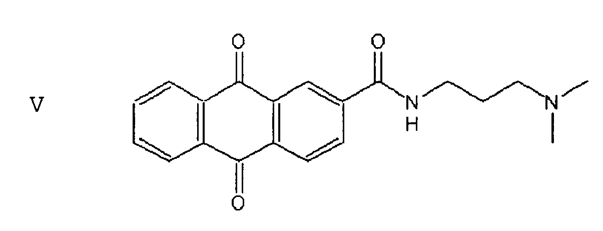

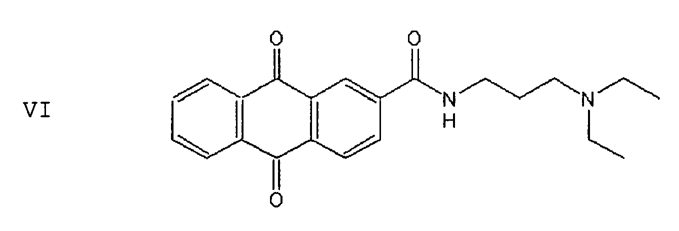

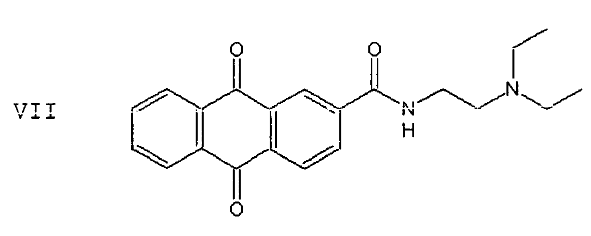

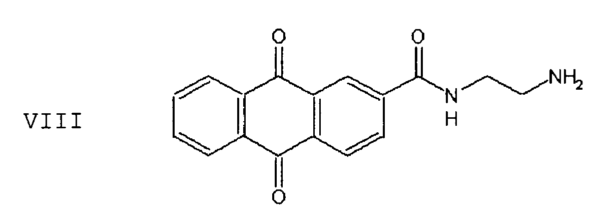

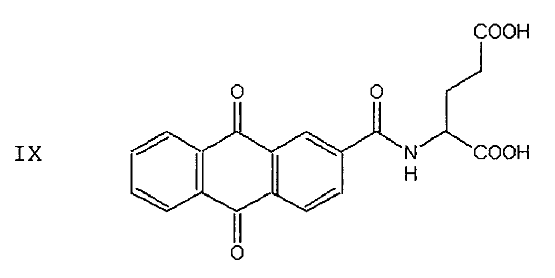

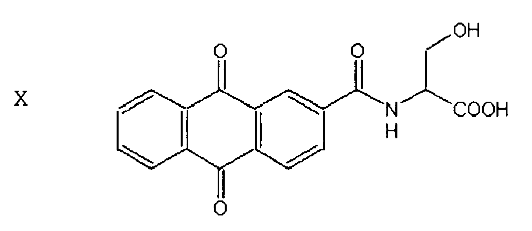

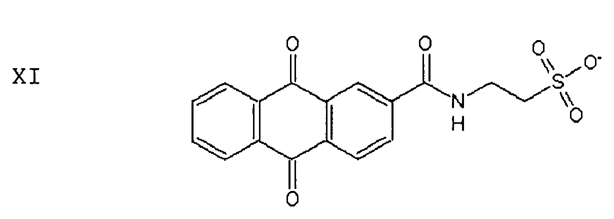

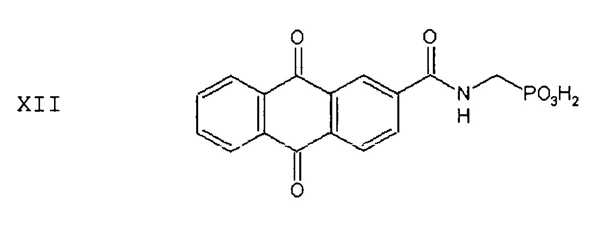

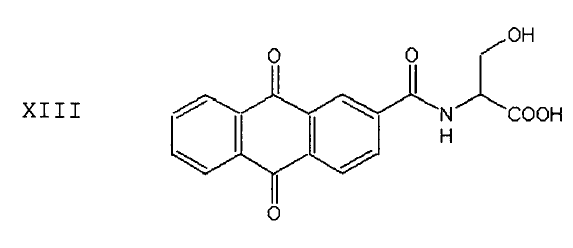

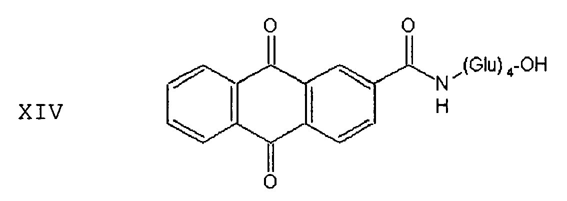

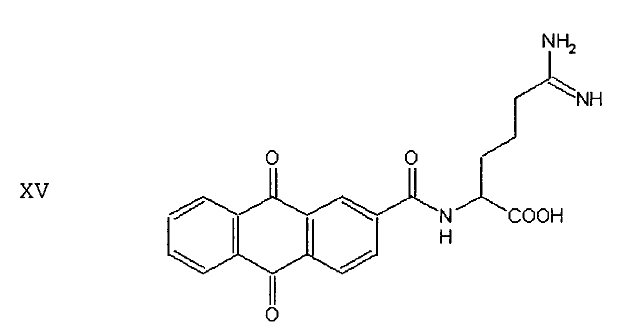

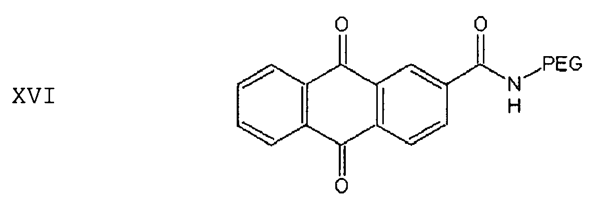

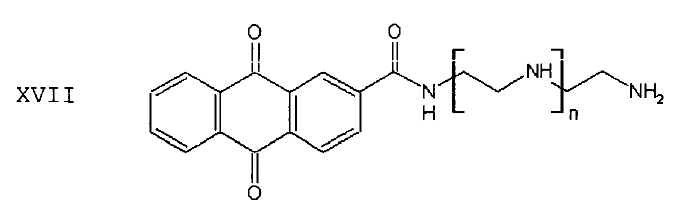

9. The separating system of claim 8, wherein the separating coating has a thickness of between 0.01 and 15 µm and that.

10. A separating system according to claim 8 or 9, wherein one or more of the substrates each are in the form of a sheet-like material, preferably selected from a cord, a hollow pipe or a three dimensional unit, wherein one dimension designated the thickness is shorter than the two other dimensions designated the length and the width, respectively, said sheet like substrate preferably being selected from the group consisting of a tape, a band, a strip, a sheet, a plate and a cord.

11. A separating system according to any one of the claims 8-10 wherein one or more of the substrates each are in the form of a sheet-like, three dimensional unit, wherein one dimension designated the length is more than 2 times, preferably more than 5 times and even more preferably more than 10 times the longest of the other two dimensions, preferably the length being at least 10 cm, such as 25 or 50 cm, more preferably at least 100 cm and even more preferably at least 200 cm.

## Patentansprüche

1. Verfahren zur Trennung von Biokomponenten, die in einer Flüssigkeit enthalten sind, umfassend wenigstens zwei Biokomponenten mit unterschiedlichen isoelektrischen Punkten (pl-Werte), wobei das Verfahren die Schritte des
i. Bereitstellens eines ersten Trennwegs in Form einer Beschichtung zur Trennung, die auf einem folienähnlichen Substrat getragen wird, wobei die Beschichtung zur Trennung eine oder mehrere Trennschichten, wenigstens eine Trennschicht umfasst, die einen oder mehrere an das Substrat gebundene pH-aktive Bestandteile, umfassend als chemische Gruppen definierte pH-aktive Gruppen, die in der Lage sind, in wässrigen Umgebungen protoniert oder deprotoniert zu werden, umfasst oder daraus besteht,
ii. Aufbringens der Flüssigkeit mit den Biokomponenten auf die Beschichtung zur Trennung,
iii. Anlegens einer Spannung über den Trennweg durch Anbringen einer positiven Elektrode und einer negativen Elektrode, die mit der Beschichtung zur Trennung in Kontakt stehen und sich entlang des Trennwegs in einem Abstand voneinander befinden, wobei der näher an der negativen Elektrode liegende Bereich als negatives Ende des Trennwegs und der näher an der positiven Elektrode liegende Bereich als positives Ende des Trennwegs bezeichnet wird,
iv. Zulassens, dass wenigstens einige der Biokomponenten in Richtung einer der Elektroden zu einer oder mehreren Sammelstationen wandern können,
v. Einsammeln der einmal getrennten Biokomponenten aus wenigstens einer Sammelstation umfasst,
**dadurch gekennzeichnet, dass** die pH-aktiven Bestandteile über ein Chinon an das Substrat gebunden sind, wobei die Kombination aus Chinon und aktivem Bestandteil ausgewählt ist aus der Gruppe, bestehend aus Chinonen mit den Strukturformeln I, II, III, IV, V, VI, VII, VIII, IX, X, XI, XII, XIII, XIV, XV, XVI und XVII

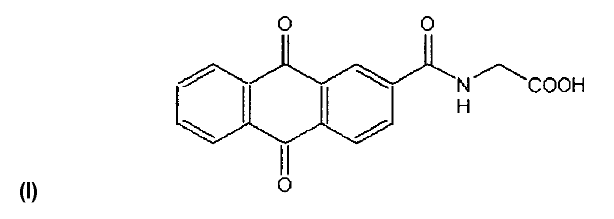

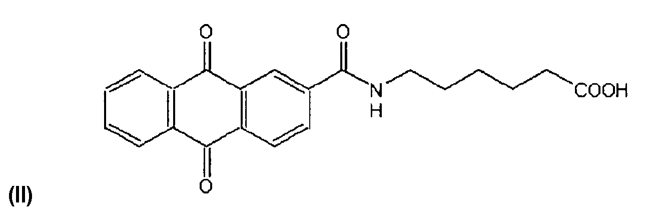

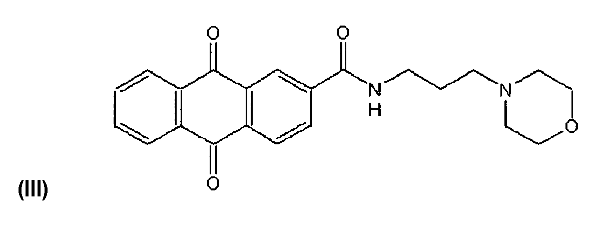

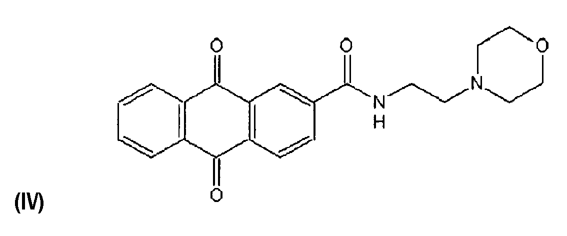

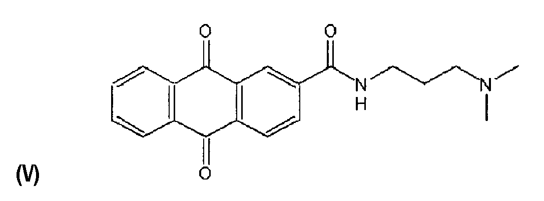

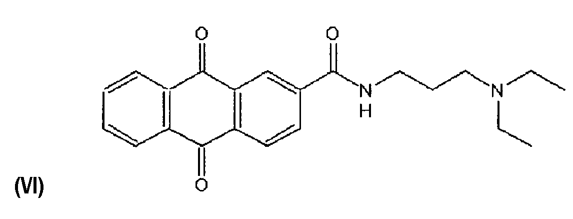

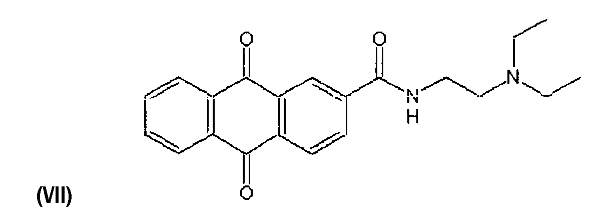

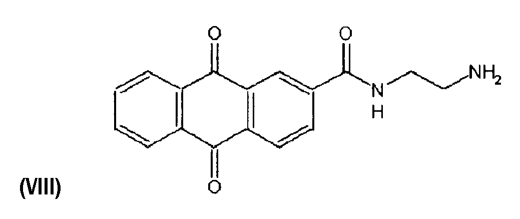

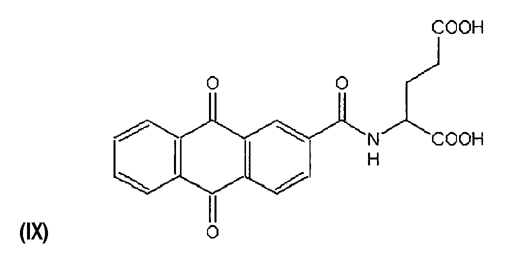

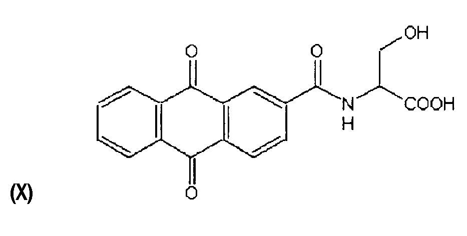

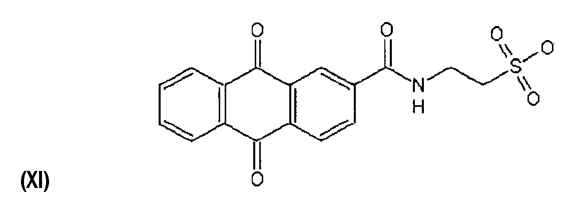

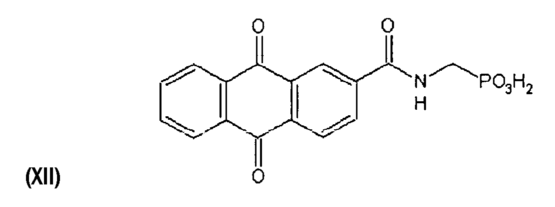

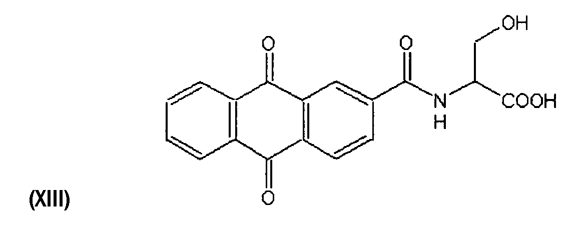

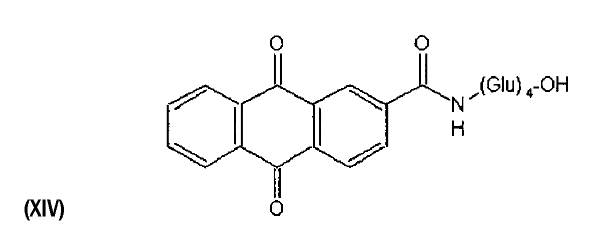

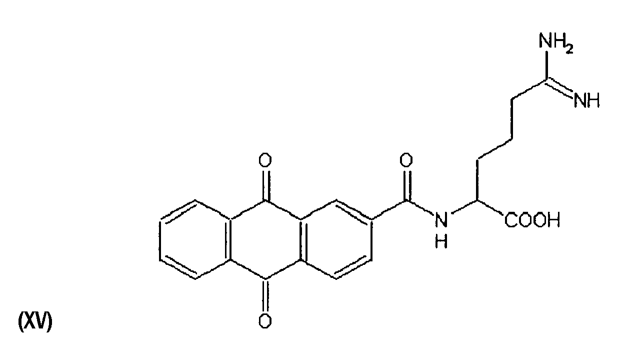

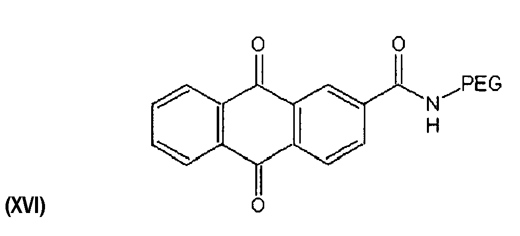

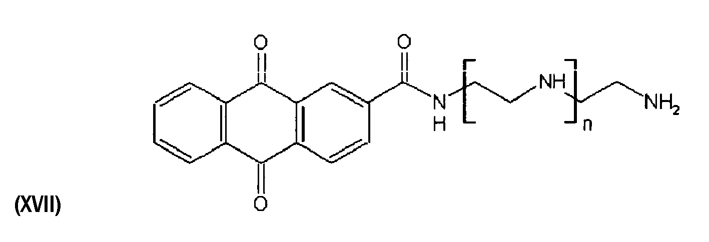

2. Verfahren nach Anspruch 1, wobei die Beschichtung zur Trennung einen von der pH-aktiven Gruppe bereitgestellten pH-Wert aufweist, wobei der pH-Wert niedriger ist als einer oder mehrere der pI-Werte der Biokomponenten und höher ist als einer oder mehrere der pI-Werte der anderen Biokomponenten, vorzugsweise die Beschichtung zur Trennung einen von der pH-aktiven Gruppe bereitgestellten pH-Wert aufweist, wobei der pH-Wert wenigstens 0,1, wie beispielsweise wenigstens 0,5 oder beispielsweise wenigstens 1 pH-Werteinheit niedriger ist als einer oder mehrere der pI-Werte der Biokomponenten und wenigstens 0,1, beispielsweise wenigstens 0,5 oder beispielsweise wenigstens 1 pH-Werteinheit höher ist als der pI-Wert der anderen Biokomponenten, **dadurch** charakterisiert, dass die Beschichtung zurTrennung eine Dicke zwischen 0,01 und 15 µm aufweist.

3. Verfahren nach einem der Ansprüche 1 und 2, wobei die Beschichtung zurTrennung einen pH-Wert aufweist, der um weniger als 1 pH-Werteinheit, wie zum Beispiel um weniger als 0,5 pH-Werteinheiten oder sogar um weniger als 0,1 pH-Werteinheiten entlang des Trennwegs variiert, und die Beschichtung zur Trennung vorzugsweise einen pH-Wert aufweist, der entlang des Trennwegs im Wesentlichen gleich bleibt.

4. Verfahren nach einem der Ansprüche 1-2, wobei die Beschichtung zurTrennung einen pH-Wert aufweist, der einen pH-Gradienten entlang des Trennwegs umfasst, der Gradient kontinuierlich oder stufenweise entlang des Trennwegs sein kann und der pH-Gradient vorzugsweise eine pH-Wertänderung von bis zu ungefähr8 pH-Werteinheiten, bevorzugterzwischen 0,1 und 5 pH-Werteinheiten, wie zum Beispiel 0,5 und 3 Einheiten entlang des Trennwegs umfasst.

5. Verfahren nach einem der Ansprüche 1-4, wobei der Trennweg zwei Sammelstationen umfasst, eine als Sammelstation hohen pH-Werts bezeichnete Sammelstation, die näher an der negativen Elektrode angeordnet ist als die andere als Sammelstation niederen pH-Werts bezeichnete Sammelstation, das Verfahren die Schritte des Sammelns der Biokomponenten von einer oder beiden Sammelstationen und die gesammelten Biokomponenten einer weiteren Trennung, vorzugsweise unter Verwendung eines weiteren Trennwegs mit pH-aktiven Komponenten, unterworfen werden.

6. Verfahren nach einem der Ansprüche 1-5, wobei die gesammelten, einmal getrennten Biokomponenten einerweiteren Trennung durch Aufbringen der Biokomponenten in einer Flüssigkeit auf einen zweiten Trennweg in Form einer auf einem Substrat getragenen Beschichtung zur Trennung unterworfen werden, wobei die Beschichtung zur Trennung eine oder mehrere Trennschichten, wenigstens eine Trennschicht umfasst, die einen oder mehrere an das Substrat gebundene und pH-aktive Gruppen umfassende pH-aktive Bestandteile umfasst oder daraus besteht, und der pH-Wert oder der Bereich der pH-Werte der Beschichtung zur Trennung des zweiten Trennwegs verschieden von dem pH-Wert oder dem Bereich der pH-Werte der Beschichtung zur Trennung des ersten Trennwegs ist.

7. Verfahren nach Anspruch 6, wobei eine Spannung über den zweiten Trennweg durch Anbringen einer positiven Elektrode und einer negativen Elektrode, die mit der Beschichtung zur Trennung in Kontakt stehen und sich entlang des Trennwegs in einem Abstand voneinander befinden, angelegt ist, und wenigstens einige der Biokomponenten in Richtung einer der Elektroden zu einer oder mehreren Sammelstationen wandern können.

8. System zur Trennung zur Verwendung in der Trennung von in einer Flüssigkeit enthaltenen Biokomponenten, umfassend wenigstens zwei Biokomponenten mit unterschiedlichen isoelektrischen Punkten (pI-Werte), wobei das System zur Trennung einen Satz Trennwege, jeder in Form einer auf einem Substrat getragenen Beschichtung zur Trennung umfasst, der Satz Trennwege 2 oder mehrere Trennwege umfasst, die Beschichtung zur Trennung jedes Trennwegs eine oder mehrere Trennschichten, wenigstens eine Trennschicht umfasst, die einen oder mehrere an das Substrat gebundene pH-aktive Bestandteile, umfassend als chemische Gruppen definierte pH-aktive Gruppen, die in der Lage sind, in wässrigen Umgebungen protoniert oder deprotoniert zu werden, umfasst oder daraus besteht, die pH-aktiven Gruppen dafür sorgen, dass die Beschichtung zur Trennung einen pH-Wert entlang des Trennwegs aufweist, das Trennsystem 2 oder mehrere Trennwege umfasst, die sich bezüglich des pH-Werts der Beschichtung zur Trennung voneinander unterscheiden,
**dadurch** charakterisiert, dass die pH-aktiven Bestandteile über ein Chinon an das Substrat gebunden sind, wobei die Kombination aus Chinon und aktivem Bestandteil ausgewählt ist aus der Gruppe, bestehend aus Chinonen mit den Strukturformeln I, II, III, IV, V, VI, VII, VIII, IX, X, XI, XII, XIII, XIV, XV, XVI und XVII

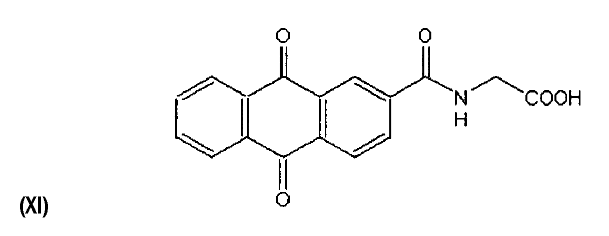

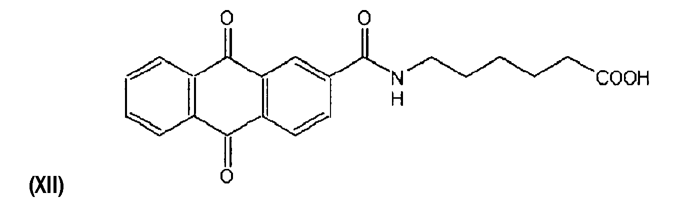

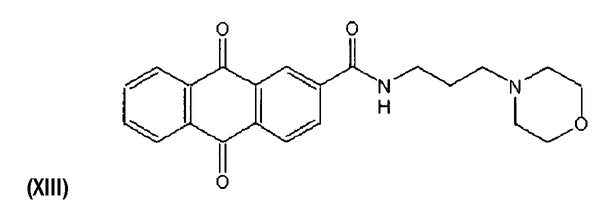

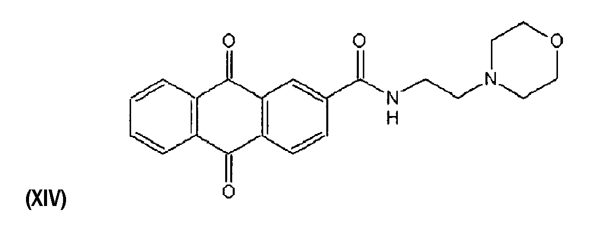

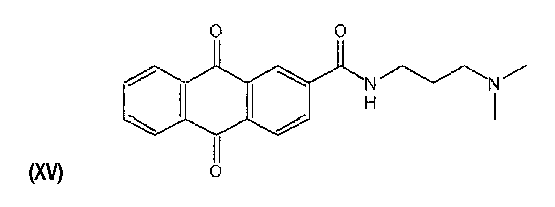

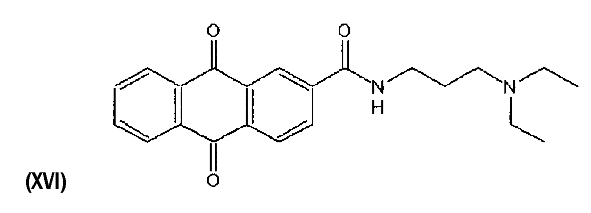

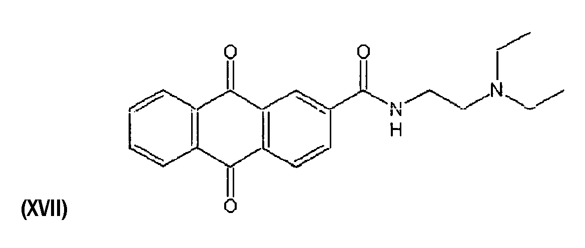

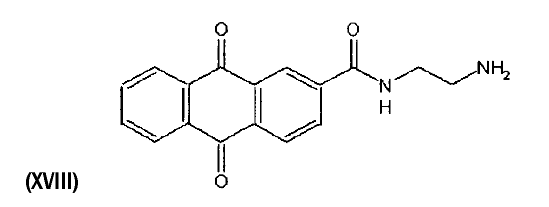

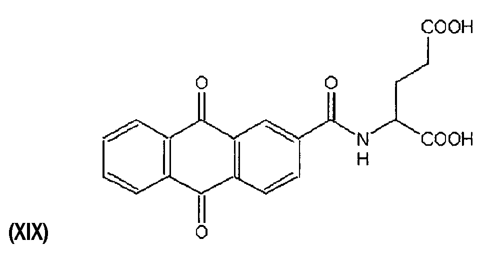

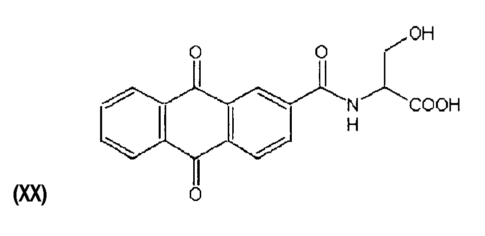

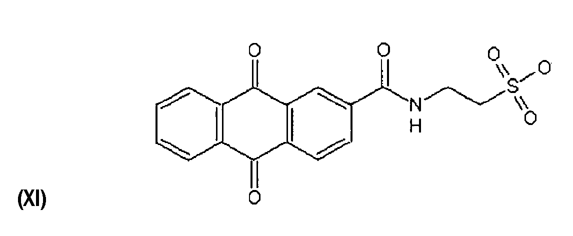

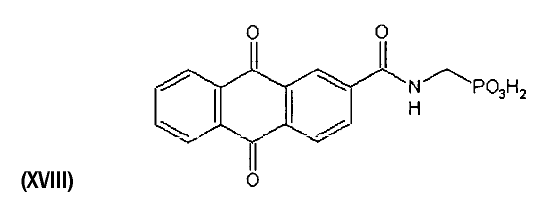

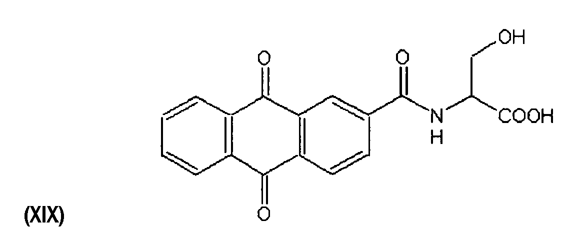

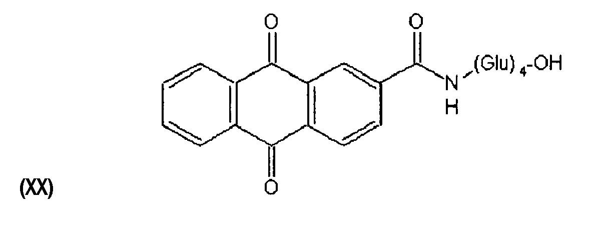

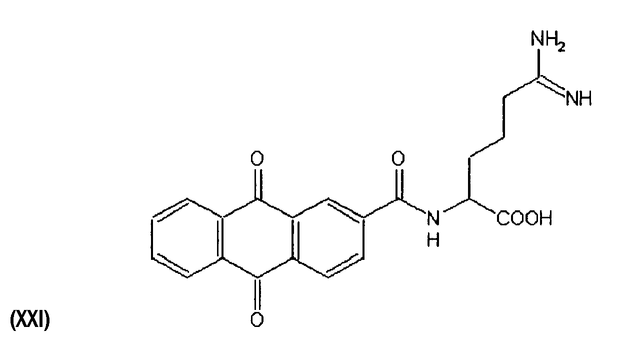

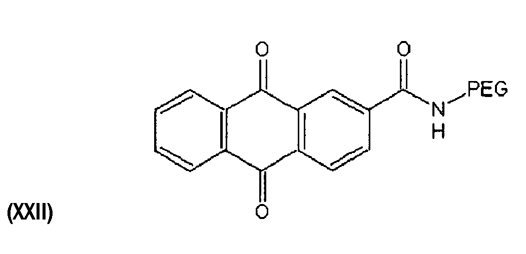

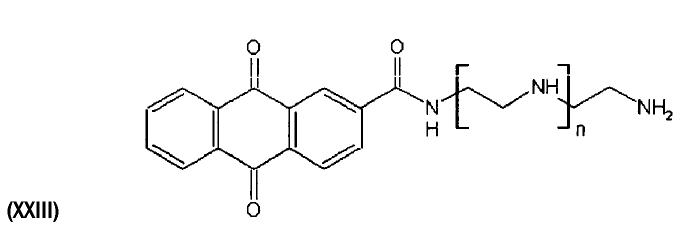

9. System zur Trennung nach Anspruch 8, wobei die Beschichtung zur Trennung eine Dicke zwischen 0,01 und 15 µm aufweist.

10. System zur Trennung nach Anspruch 8 oder 9, wobei eines oder mehrere der Substrate jeweils in Form eines folienähnlichen Materials, vorzugsweise ausgewählt aus einem Strang, einem Hohlrohr oder einem dreidimensionalen Element vorliegen, wobei eine als Dicke bezeichnete Abmessung kürzer ist als die zwei anderen als Länge beziehungsweise Breite bezeichneten Abmessungen und das folienähnliche Substrat vorzugsweise aus der Gruppe, bestehend aus einem Band, einem Streifen, einer Leiste, einer Bahn, einer Platte und einem Strang ausgewählt ist.

11. System zur Trennung von Biomolekülen nach einem der Ansprüche 8-10, wobei eines oder mehrere der Substrate jeweils in Form eines folienähnlichen Materials, eines dreidimensionalen Elements vorliegen, wobei eine als Länge bezeichnete Abmessung mehr als 2 mal vorzugsweise mehr als 5 mal und besonders bevorzugt mehr als 10 mal länger als die anderen zwei Abmessungen ist und die Länge vorzugsweise wenigstens 10 cm, wie zum Beispiel 25 oder 50 cm, bevorzugter wenigstens 100 cm und besonders bevorzugt wenigstens 200 cm beträgt.

## Revendications

1. Une méthode pour la séparation des composés biologiques contenues dans un liquide comprenant au moins deux composés biologiques avec des points isoélectriques (valeurs pl) différentes, la méthode comprenant les étapes de
i. la mise á disposition d'un premier chemin de séparation sous forme d'un revêtement de séparation supporté par un substrat sous forme d'une feuille dans lequel le revêtement de séparation comprenant une ou plusieurs couches de séparation, dont au moins une couche de séparation consistant de ou comprenant une ou plusieurs composés pH actifs, liés au substrat et comprenant des groupes pH actifs qui sont définis comme étant des groupes chimiques qui sont capables d'être protoné ou déprotoné dans des milieux aqueux,
ii. l'application du liquide avec les composés biologiques sur le revêtement de séparation,
iii. l'application d'une tension le long du chemin de séparation en appliquant une électrode positive et une électrode négative en contact avec le revêtement de séparation à une distance l'une à l'autre, le long du chemin de séparation, la région qui est plus proche de l'électrode négative étant désigné la fin négative du chemin de séparation et la région plus proche de l'électrode positive etant désigné la fin positive du chemin de séparation,
iv. Permettant au moins quelques uns des composés biologiques de voyager vers une des électrodes à une ou plusieurs stations de collection,
v. la collection des composés biologiques séparés de au moins une station de collection,
**caractérisé en ce que** les composés pH actifs sont liés au substrat par une quinone, où la combinaison de la quinone et composé actif est sélectionnée du groupe consistant des quinones ayant les formules structurales I, II, III, IV, V, VI, VII, VIII, IX, X, XI, XII, XIII, XIV, XV, XVI et XVII

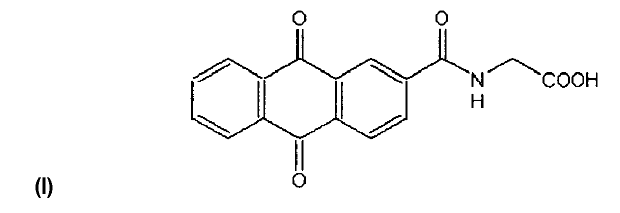

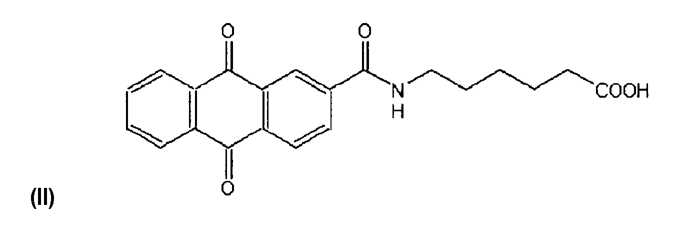

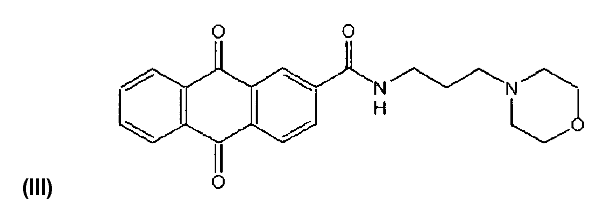

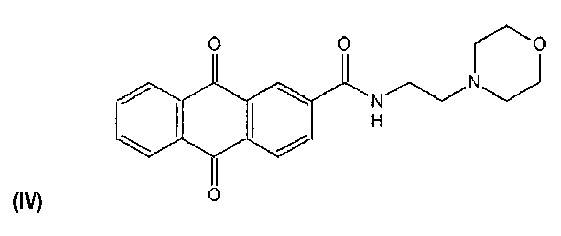

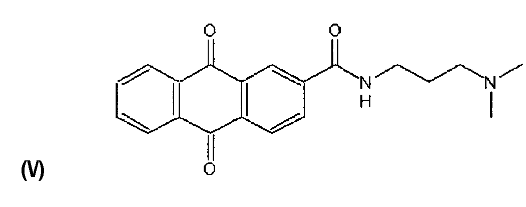

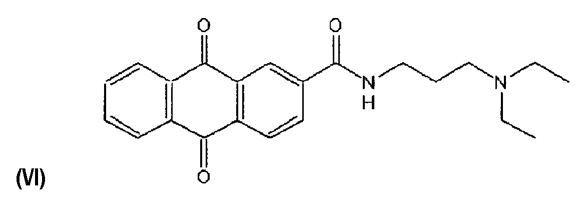

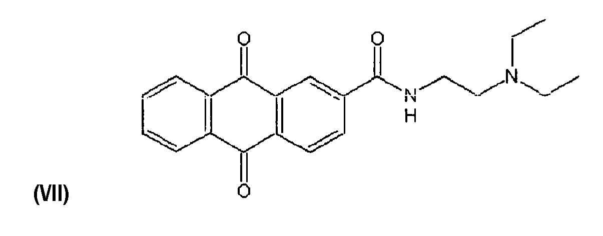

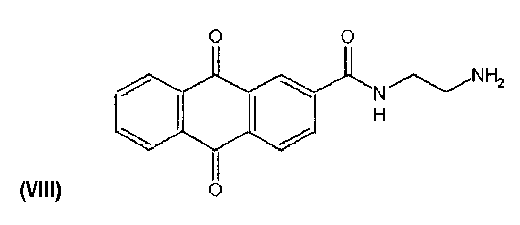

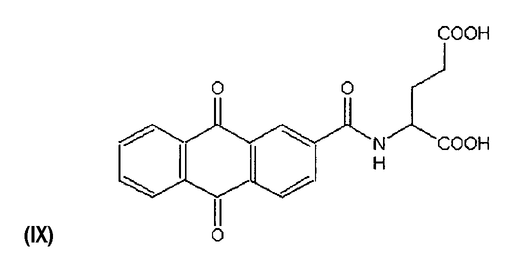

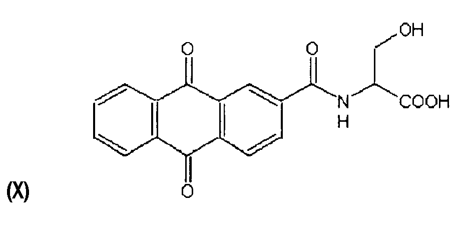

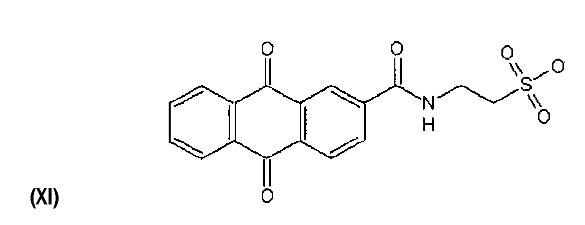

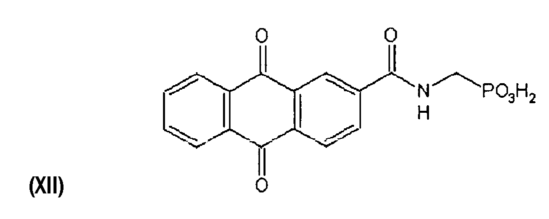

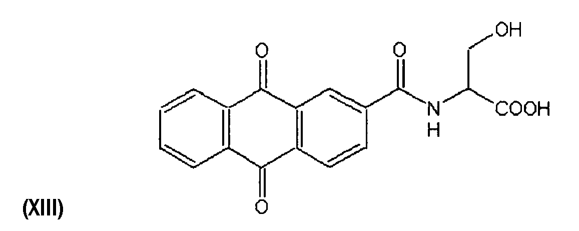

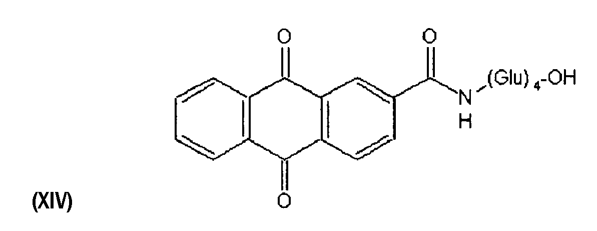

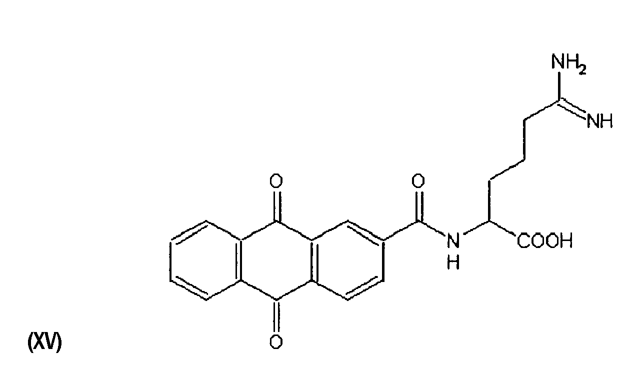

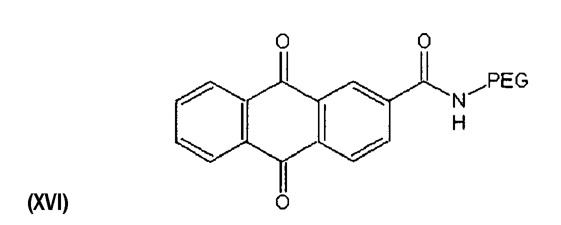

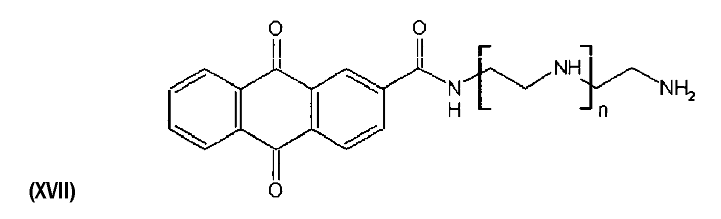

2. Une méthode selon la revendication 1, dans laquelle le revêtement de séparation possède une valeur pH pourvue du groupe pH actif, dont la valeur pH est inférieure qu'une ou plusieurs des valeurs pI des composés biologiques et plus élevée qu'une ou plusieurs des valeurs pI des autres composés biologiques, de préférence le revêtement de séparation possède une valeur pH pourvu du groupe pH actif, la valeur pH étant au moins 0.1, comme par exemple au moins 0.5, ou comme par exemple au moins une unité pH inférieure qu'une ou plusieurs des valeurs pI des composés biologiques et au moins 0.1, comme par exemple au moins 0.5, ou comme par exemple au moins une unité pH plus élevée que la valeur pI des autres composés biologiques, **caractérisé en ce que** le revêtement de séparation ayant une épaisseur entre 0.01 et 15 µm.

3. Une méthode selon l'une des revendications 1 et 2, dans laquelle le revêtement de séparation possède une valeur pH, qui varie moins que une unité de pH, comme par exemple moins que 0.5 unités pH, ou même moins que 0.1 unités le long du chemin de séparation, le chemin de séparation ayant de préférence une valeur pH qui est essentiellement constante le long du chemin de séparation.

4. Une méthode selon l'une des revendications 1-2, dans laquelle le revêtement de séparation possède une valeur pH qui comprend un gradient de pH le long du chemin de séparation, le gradient étant continu ou graduel le long du chemin de séparation, le gradient de pH comprenant de préférence une variation du pH jusqu'à environ 8 valeurs pH, plus préféré entre 0.1 et 5 unités pH, comme par exemple entre 0.5 et 3 unités le long du chemin de séparation.

5. Une méthode selon l'une des revendications 1-4, dans laquelle le chemin de séparation comprend deux stations de collection, une station de collection étant désignée la station de collection de pH élevé, qui est placé plus proche à l'électrode négative que l'autre station de collection étant désignée la station de collection de pH bas, la méthode comprenant l'étape de collection des composés biologiques de l'une ou de deux des stations de collection, les composés biologiques collectionnées étant soumis à une séparation supplémentaire, de préférence en utilisant un autre chemin de séparation avec des composés pH actifs.

6. Une méthode selon l'une des revendications 1-5, dans laquelle les composés biologiques collectionnées et séparées sont soumis à une séparation supplémentaire en appliquant les composés bidogiques dans un liquide sur un deuxième chemin de séparation qui est sous forme d'un revêtement de séparation supporté par un substrat, dans laquelle le revêtement de séparation comprenant une ou plusieurs couches de séparation, au moins une couche de séparation consistant de ou comprenant une ou plusieurs composés pH-actifs, liés au substrat et comprenant des groupes pH actif, la valeur pH ou la plage des valeurs pH du revêtement du deuxième chemin de séparation étant différent(e) de la valeur pH ou de la plage de valeurs pH du revêtement de séparation du premiér chemin de séparation.

7. Une méthode selon la revendication 6, dans laquelle une tension est appliquée le long du deuxième chemin de séparation en appliquant une électrode positive et une électrode négative en contact avec le revêtement de séparation à uns distance l'une de l'autre le long du chemin de séparation, et au moins quelques uns des composés biologiques étant permis de voyager vers l'une des électrodes à une ou plusieurs de stations de collection.

8. Un système de séparation pour l'utilisation dans la séparation des composés biologiques contenue dans un liquide comprenant au moins deux composés biologiques ayant des points isoélectriques différents (valeurs pl), le système de séparation comprenant un ensemble des chemins de séparation, chacun sous forme d'un revêtement de séparation supporté par un substrat, l'ensemble des chemins de séparation comprenant deux ou plusieurs chemins de séparation, la couche de séparation de chacun des chemins de séparation comprenant une ou plusieurs couches de séparation, au moins une couche de séparation consistant de ou comprenant une ou plusieurs composés pH-actifs lié au substrat et comprenant des groupes pH actifs définis comme groupes chimiques qui sont capables d'être protoné ou déprotoné dans des milieux aqueux, les groupes pH-actifs pourvoyant la couche de séparation avec une valeur pH le long du chemin de séparation, le système de séparation comprenant deux ou plusieurs chemins de séparation, qui diffèrent l'un de l'autre par rapport à la valeur pH du revêtement de séparation,
**caractérisé en ce que** les composés pH actifs étant liés au substrat par une quinone, où la combinaison de la quinone et composé actif est sélectionnée du groupe consistant des quinones ayant les formules structurales I, II, III, IV, V, VI, VII, VIII, IX, X, XI, XII, XIII, XIV, XV, XVI et XVII

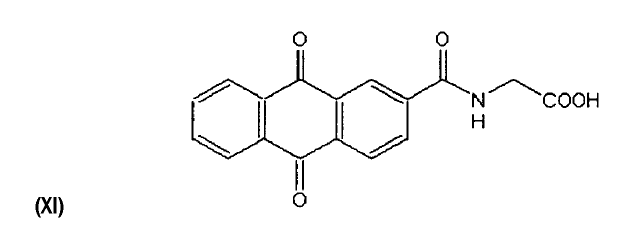

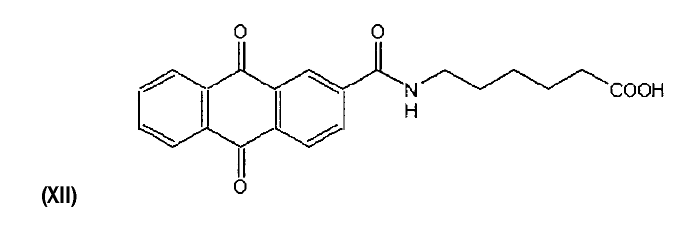

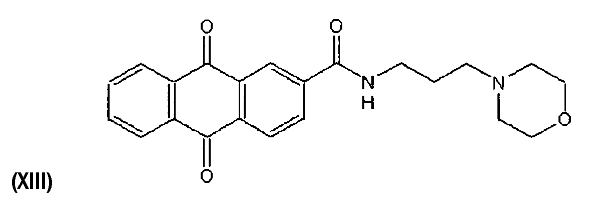

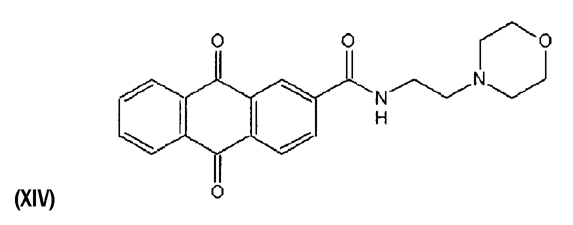

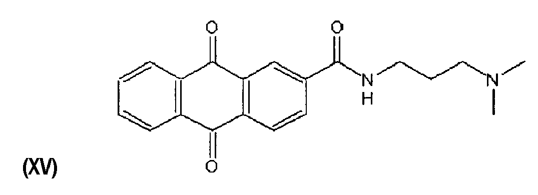

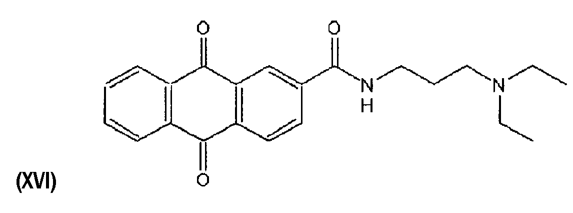

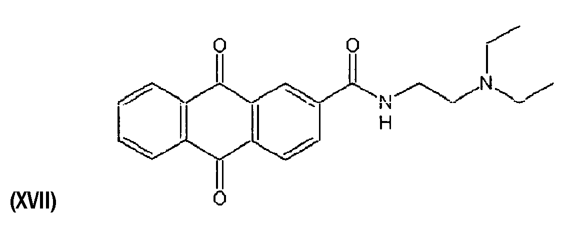

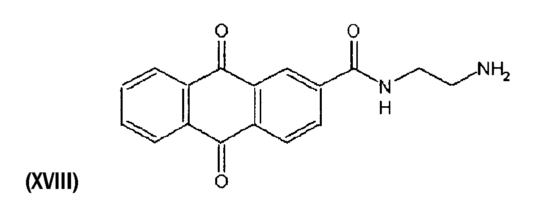

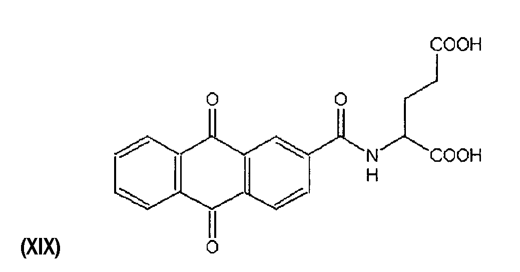

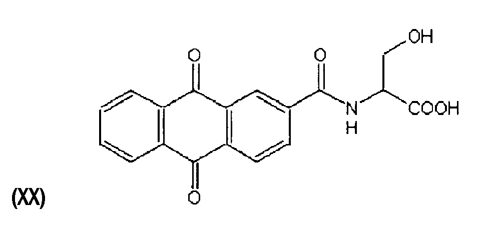

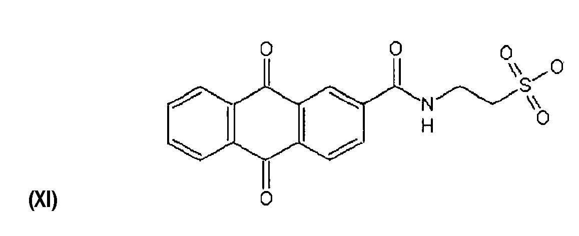

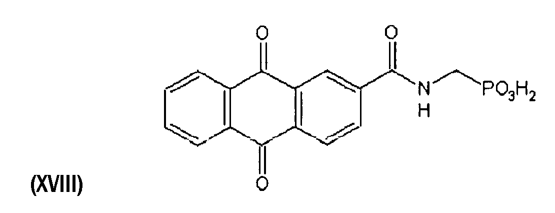

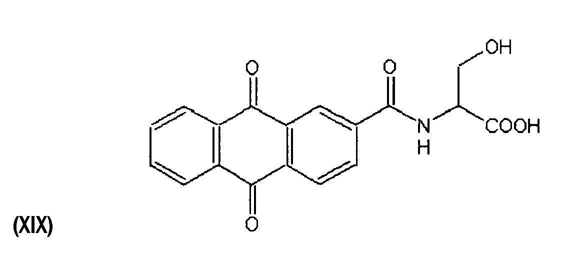

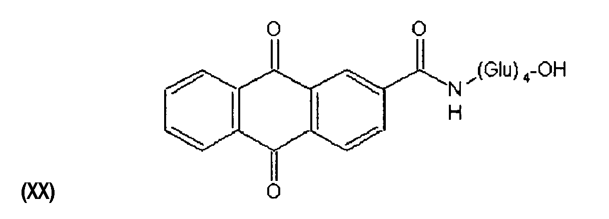

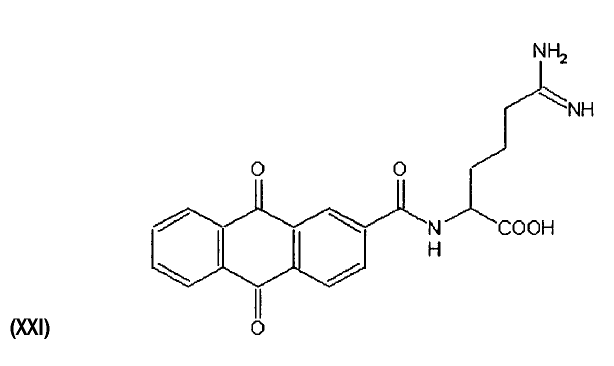

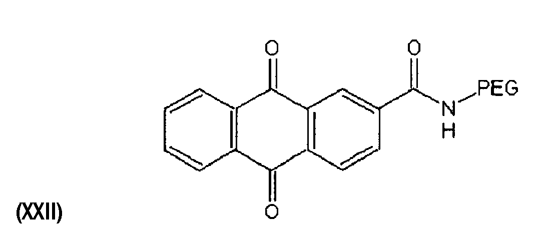

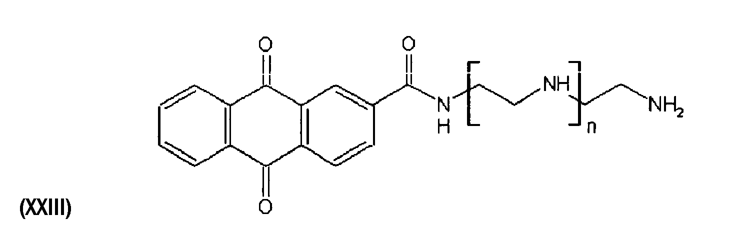

9. Le système de séparation selon la revendication 8, dont le revêtement de séparation possède une épaisseur entre 0.01 et 15 µm.

10. Un système de séparation selon la revendication 8 ou 9, dans lequel une ou plusieurs des substrats, chacun sous forme d'un matériau ressemblant à une feuille, de préférence sélectionné d'une corde, d'un tuyau creux ou d'une unité tridimensionnelle, dans lequel une dimension désignant l'épaisseur est plus petite que les deux autres dimensions désignant la longueur et la largeur, respectivement, le substrat ressemblant à une feuille étant de préférence sélectionné du groupe consistant d'un cordon, d'un ruban, d'une feuille, d'une plaque, d'une ficelle.

11. Un système de séparation selon l'une des revendications 8 à 10, dans lequel une ou plusieurs des substrats, chacun est sous forme, d'une unité tridimensionnelle ressemblant a une feuille , dans lequel une dimension désignant la longueur est plus que 2 fois, de préférence plus que 5 fois et même plus préféré plus que 10 fois la plus longue des deux autres dimensions, de préférence la longueur étant au moins 10 cm, comme par exemple 25 ou 50 cm, plus préféreé au moins 100 cm et même plus préférée au moins 200 cm.
